# EUROPEAN PATENT SPECIFICATION

(11) **EP 3 934 915 B1**
(45) Date of publication and mention of the grant of the patent: **02.08.2023**
(21) Application number: 20770934.6
(22) Date of filing: 09.03.2020
(51) Int. Cl.: B29C 64/141, B29C 64/241, B29C 64/268, B29C 64/321, B29C 64/245, B22F 12/13, B22F 12/41, B22F 12/50, B22F 12/45, B33Y 10/00, B33Y 30/00

(54) **APPARATUS AND METHOD FOR MODELING THREE-DIMENSIONAL OBJECTS**
VORRICHTUNG UND VERFAHREN ZUR MODELLIERUNG DREIDIMENSIONALER OBJEKTE
APPAREIL ET PROCÉDÉ DE MODELAGE D'OBJETS TRIDIMENSIONNELS

(30) Priority: 08.03.2019 JP 2019042166; 09.05.2019 JP 2019089260; 30.07.2019 JP 2019139461; 26.09.2019 JP 2019175820; 17.02.2020 JP 2020024417
(43) Date of publication of application: 12.01.2022
(73) Proprietor: Ricoh Company, Ltd., Tokyo 143-8555 (JP)
(72) Inventor: FUJITA, Takashi, Tokyo 143-8555 (JP); SUHARA, Hiroyuki, Tokyo 143-8555 (JP); SAKAI, Kohji, Tokyo 143-8555 (JP); KOBASHIGAWA, Shohta, Tokyo 143-8555 (JP); TAKEUCHI, Atsushi, Tokyo 143-8555 (JP); TAMURA, Asato, Tokyo 143-8555 (JP); MAEDA, Ichiro, Tokyo 143-8555 (JP); NISHIO, Takuei, Tokyo 143-8555 (JP)
(74) Representative: SSM Sandmair
(86) International application number: PCT/JP2020/010110
(87) International publication number: WO 2020/184525

(56) References cited:
- EP-A1- 3 263 339
- US-A1- 2010 173 096

## Description

### [Technical Field]

The present invention relates to an apparatus configured to model a three-dimensional modeled object, an apparatus configured to fly particles, and a method of modeling a three-dimensional modeled object.

### [Background Art]

Apparatuses for modeling a three-dimensional modeled object are generally known to employ an additive manufacturing process utilizing techniques such as fused deposition modeling (FDM), stereolithography, powder sintering, material deposition, powder fixing, sheet lamination, and directed energy deposition.

The process of irradiating a light-absorbing three-dimensional modeled object forming agent with an optical vortex laser beam and flying the three-dimensional modeled object forming agent to three-dimensionally attach the agent to a target is also known (PTL 1).

### [Citation List]

### [Patent Literature]

[PTL 1]
Re-publication of PCT International Publication No. 2016-136722

EP 3 263 339 A1 discloses a light-absorbing material flying apparatus including: a light-absorbing material that absorbs light; and a light-absorbing material flying section configured to irradiate the light-absorbing material with an optical vortex laser beam corresponding to a light absorption wavelength of the light-absorbing material to fly the light-absorbing material by an energy of the optical vortex laser beam in a direction in which the optical vortex laser beam is emitted to attach the light-absorbing material on an attachment target.

US 2010/0173096 A1 discloses a system and method for controlling fabrication of three-dimensional objects. The system includes a printing assembly having an irradiation unit and a printing head, the printing assembly is movable between a printing area and a service area. The system further includes a light sensor positioned at the service area to measure the output radiation power of the irradiation unit and a controller to receive information from the sensor and to automatically adjust the electrical power supplied to the irradiation unit.

### [Summary of Invention]

### [Technical Problem]

Unfortunately, the configuration disclosed in PTL 1 is less likely to ensure the modeling quality because the flown three-dimensional modeled object forming agent is cured by ultraviolet rays, for example, after being attached and the three-dimensional modeled object forming agent scatters when the three-dimensional modeled object forming agent impinges on the modeled object, specifically, impinges on an edge of the modeled object.

The present invention is made in view of the problem above and aims to improve the modeling quality.

### [Solution to Problem]

The present invention is defined by an apparatus according to claim 1, and by a method according to claim 14.

### Advantageous Effects of Invention

An aspect of the present invention can improve the modeling quality.

### Brief Description of Drawings

[fig.1]Fig. 1 is a diagram of an apparatus configured to model a three-dimensional modeled object according to a first embodiment of the present invention.
[fig.2]Fig. 2 is a microphotograph of an example of the state of a modeling material on a carrier.
[fig.3A]Fig. 3A is a microphotograph of another example.
[fig.3B]Fig. 3B is a microphotograph of the other example.
[fig.4]Fig. 4 is a diagram illustrating a state of cross-section observation by a high-speed camera to serve to illustrate a flight state of a modeling material.
[fig.5]Fig. 5 is a diagram serving to illustrate a fall trajectory of a modeling material.
[fig.6]Fig. 6 is a diagram serving to illustrate droplets landing variations of a modeling material.
[fig.7]Fig. 7 is a flowchart serving to illustrate the effect of the embodiment.
[fig.8]Fig. 8 is a diagram of an apparatus configured to model a three-dimensional modeled object according to a second embodiment of the present invention.
[fig.9]Fig. 9 is a diagram of an apparatus configured to model a three-dimensional modeled object according to a third embodiment of the present invention.
[fig.10]Fig. 10 is a diagram of an apparatus configured to model a three-dimensional modeled object according to a fourth embodiment of the present invention.
[fig.11]Fig. 11 is a diagram of a multi-air nozzle of the apparatus.
[fig.12]Fig. 12 is a diagram of an apparatus configured to model a three-dimensional modeled object according to a fifth embodiment of the present invention.
[fig. 13A]Fig. 13A is a diagram serving to illustrate a supporting method in modeling a complicated shape.
[fig. 13B]Fig. 13B is a diagram serving to illustrate the supporting method in modeling the complicated shape.
[fig. 13C]Fig. 13C is a diagram serving to illustrate the supporting method in modeling the complicated shape.
[fig.13D]Fig. 13D is a diagram serving to illustrate the supporting method in modeling the complicated shape.
[fig.14]Fig. 14 is a diagram serving to illustrate the surface temperature of a modeled object being modeled in an apparatus configured to model a three-dimensional modeled object according to a six embodiment of the present invention.
[fig.15]Fig. 15 is a diagram illustrating the relation between a flying modeling material and a radiation region by a laser for melting (laser light region).
[fig.16]Fig. 16 is a diagram serving to illustrate the surface temperature of a modeled object being modeled in an apparatus configured to modela three-dimensional modeled object according to a seventh embodiment of the present invention.
[fig.17]Fig. 17 is a diagram serving to illustrate an apparatus configured to fly particles according to an eighth embodiment of the present invention.
[fig.18]Fig. 18 is a diagram serving to illustrate a fluence threshold.
[fig.19]Fig. 19 is a diagram of an apparatus configured to model a three-dimensional modeled object according to a ninth embodiment of the present invention.

### Description of Embodiments

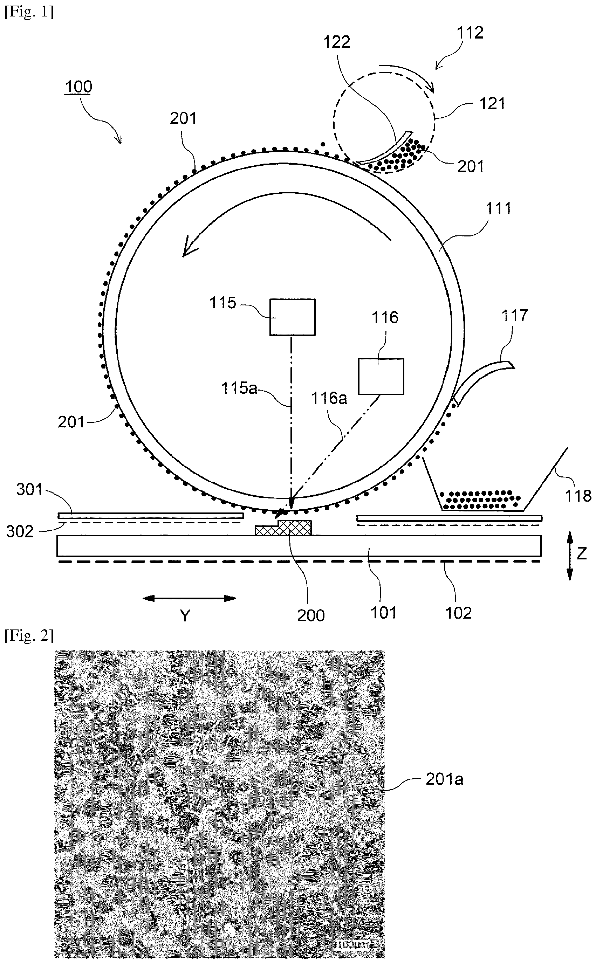

Embodiments of the present invention will be described below with reference to the accompanying drawings. A first embodiment of the present invention will be described with reference to Fig. 1. Fig. 1 is a diagram of an apparatus configured to model a three-dimensional modeled object according to the present embodiment.

The apparatus configured to model a three-dimensional modeled object (referred to as three-dimensional modeling apparatus) 100 includes a stage 101 that is a supporting member supporting a modeled object 200 to be modeled (modeled object in a modeling process). The stage 101 can reciprocate in the arrow Y direction and can move up and down in the arrow Z direction, for example, at modeling thickness 0.05-mm pitches.

Under the stage 101, a stage-heating heater 102 is disposed so that the stage 101 is regulated to a temperature suitable for a modeling material 201. Over the stage 101, a heat insulation plate 301 is disposed. A modeled object-heating heater 302 is disposed underside the heat insulation plate 301 so that the modeled object 200 receiving energy applied from the modeled object-heating heater 302 is regulated to a temperature suitable for the modeling material 201. The modeled object-heating heater 302 may be integrated with the heat insulation plate 301.

Above the stage 101, a carrier 111 formed with a rotating member is disposed to carry the modeling material 201 in the form of particles. The carrier 111 is formed with a rotating drum that carries the modeling material 201 and rotates in the arrow direction (transportation direction) to transport the modeling material 201 to above the modeled object 200 on the stage 101. The carrier 111 is a transparent member and formed with, but not limited to, a cylindrical glass member.

The modeling material 201 is to be selected as appropriate according to the target modeled object 200. In the case of resins, examples include PA12 (polyamide 12), PBT (polybutylene terephthalate), PSU (polysulfone), PA66 (polyamide 66), PET (polyethylene terephthalate), LCP (liquid crystal polymer), PEEK (polyetheretherketone), POM (polyacetal), PSF (polysulfone), PA6 (polyamide 6), and PPS (polyphenylene sulfide). The modeling material 201 is not limited to crystalline resins and may be non-crystalline resins such as PC (polycarbonate), ABS (acrylonitrile butadiene styrene), and PEI (polyetherimide), or crystalline and non-crystalline mixed resins.

Besides resins, a variety of materials such as metal, ceramic, and liquid can be used as the modeling material 201. The modeling material 201 may be a material having a viscosity of 1 pa • s or higher.

The modeling material 201 is carried on the peripheral surface of the carrier 111 mainly by Van der Waals force in the present embodiment. When the resistance value of the modeling material 201 is high, the modeling material 201 can be carried only by electrostatic adhesion force.

On the periphery of the carrier 111, a supply unit 112 is disposed to supply the modeling material 201 to the peripheral surface (surface) of the carrier 111.

The supply unit 112 includes a mesh roller 121 supplied with the modeling material 201 in the inside and rotating in the arrow direction and a blade 122 for rubbing and scrubbing the modeling material 201 inside the mesh roller 121. This supply unit 112 breaks agglomerates while rubbing and scrubbing the modeling material 201 with the blade 122 to allow the modeling material 201 to pass through the mesh roller 121, thereby forming a thin layer of the modeling material 201 on the peripheral surface of the carrier 111.

The opening of mesh of the mesh roller 121 is preferably 20 to 30% larger than the average particle diameter of the modeling material 201. Although a woven metal wire can be used, a flat mesh fabricated by electroforming is more preferred. The way in which the blade 122 comes into abutment may be trailing as illustrated in Fig. 1 or counter, and selected as appropriate. Although the opening of the mesh may be clogged with the modeling material 201, the clogging may be eliminated by bringing a brush of fibers finer than the opening into contact with the mesh roller from the outer periphery.

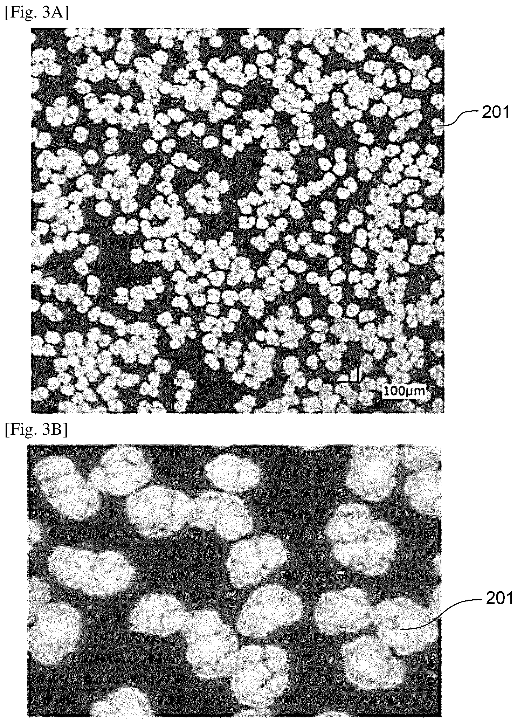

Referring now to Fig. 2 and Figs. 3A and 3B, the state of the modeling material 201 on the carrier 111 will be described. Fig. 2 and Figs. 3A and 3B are optical microphotographs of an example of different modeling materials and serve to illustrate the state.

Fig. 2 is an optical microphotograph of a modeling material 201 supplied to the peripheral surface of the carrier 111, in which a columnar modeling material 201 having a volume average particle diameter of 48 µm is used as the modeling material 201 and a stainless mesh with an opening of 70 µm and a wire diameter of 50 µm is used. In this example, it is observed that the modeling material 201 is uniformly arranged on the whole with almost no overlap.

Fig. 3A is an optical microphotograph of a modeling material 201 supplied to the peripheral surface of the carrier 111, in which PA12 smooth (volume average particle diameter of 38 µm) manufactured by Siterit is used as the modeling material 201 and a stainless mesh with an opening of 60 µm and a wire diameter of 50 µm is used. Fig. 3B is an enlarged photograph of Fig. 3A. Also in this example, the modeling material 201 is uniformly arranged on the whole with almost no overlap. Although this modeling material 201 has a peculiar shape such that three or four spherical particles are combined, the modeling material 201 does not agglomerate or overlap.

The supply by the supply unit 112 is not limited to a mesh roller. For example, contact supply by a rotor, non-contact supply, spraying from a mesh not in contact, immersion in fluidized bed by powder aeration may be employed.

Returning to Fig. 1, inside the carrier 111, a laser for flying 115 is disposed as a flying unit configured to fly the modeling material 201 from the peripheral surface of the carrier 111.

As used herein "flying" means that the modeling material 201 moves in a contactless manner from the carrier 111 toward the stage 101. Unlike transfer involving contact, the modeling material 201 can be moved in a contactless manner, thereby eliminating loss of the modeling material 201 and improving the modeling accuracy.

The laser for flying 115 includes a pulse laser and emits pulse laser light 115a from the inside of the carrier 111 to the modeling material 201.

The laser for flying 115 includes an optical scanner such as a galvano mirror. The optical scanner changes the angle of the mirror reflecting the pulse laser light 115a to change the radiation position of the pulse laser light 115a in the X direction orthogonal to both of the arrow Y direction and the arrow Z direction. The laser for flying 115 can use the optical scanner to selectively irradiate a predetermined position in the X direction with the pulse laser light 115a.

The modeling material 201 receives the pulse laser light 115a, and is then released from the powder adhesion force, for example, by a force called radiation force, and falls downward, for example, by gravity. In laser induced forward transfer (LIFT) conventionally known and disclosed, for example, in US006025110A, a material in a foil or liquid state in intimate contact with a carrier is contactlessly transferred by laser radiation, in which the material locally heated is vaporized and then flies from the peripheral surface of the carrier 111 in the direction of the pulse laser light 115a.

Fig. 1 and the like illustrate an example in which the modeling material 201 flies to the stage 101 in the gravity direction, but the direction is not necessarily kept at the normal (90°) to the stage 101 and may be inclined at a predetermined angle to the stage 101, as necessary.

In the present embodiment, we would not say that there is no contribution of the latter mechanism but we focus on the former. The reason is as follows.
1. Black powder with a high absorption coefficient of laser light and transparent powder are equivalent in flight start energy.
2. Even when the carrier is a transparent resin film, transparent powder flies.
3. The transparent resin film of the carrier does not deteriorate even with pulse laser radiation many times up to 1000 times.

The gap distance between the carrier 111 and the modeled object 200 is preferably kept approximately at 3 to 10 times greater than the average particle diameter of the modeling material 201. This gap can avoid contact between the upper and lower modeling materials before and after flight and can avoid dissipation due to flight.

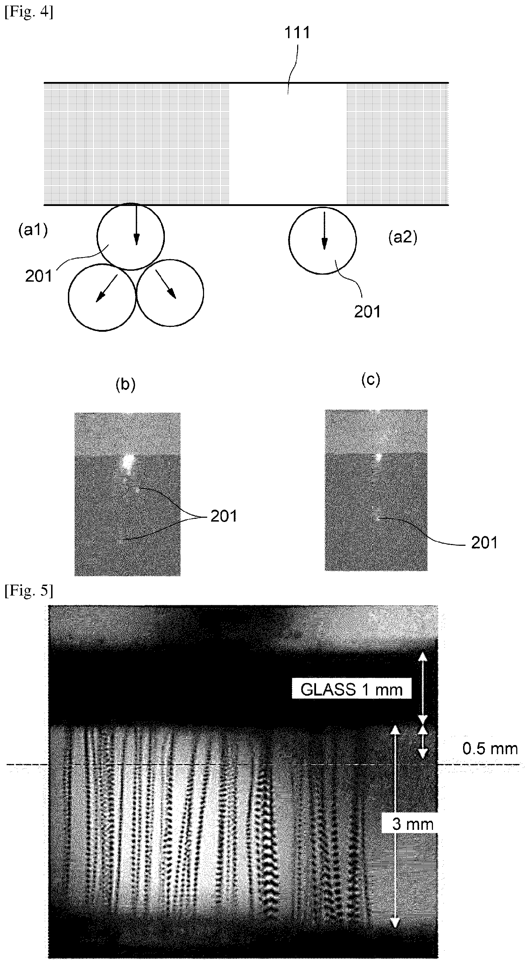

Referring now to Fig. 4, the flight state of the modeling material 201 will be described. Fig. 4 is a diagram serving to illustrate the flight state. Figs. 4 illustrates, at (b) and (c), the state of cross-section observation by a high-speed camera.

As illustrated at (a1) in Fig. 4, when the modeling material 201 overlaps in multiple layers on the peripheral surface of the carrier 111, radiation of the pulse laser light 115a allows the modeling material 201 to fly and then dissipate as illustrated at (b) in Fig. 4.

By contrast, as illustrated at (a2) in Fig. 4, when the modeling material 201 is carried on the peripheral surface of the carrier 111 without overlaps, radiation of the pulse laser light 115a allows the modeling material 201 to fly in the vertical direction as illustrated in Fig. 4(c).

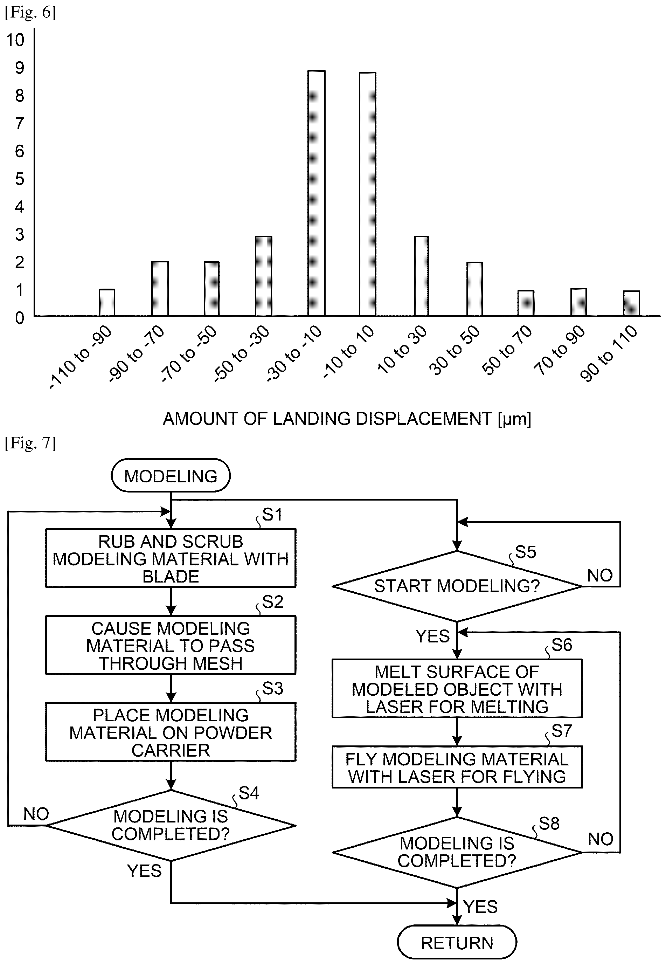

Referring now to Fig. 5 and Fig. 6, the fall trajectory and droplets landing variations of the modeling material will be described.

Fig. 5 illustrates the fall trajectory of a plurality of powder particles (modeling material) captured by interval continuous shooting under the following conditions.
PA12 powder: average particle diameter 38 µm
Laser wavelength: 532 nm
Pulse width: 15 ps
Peak power: 0.74 MW
Number of beam overlaps: 1.3
Beam diameter: 40 µm
Frequency: 6.6 kHz
Scan speed: 200 mm/s
Shooting: 20 kfps

With powders of transparent PC, black PC, PE, and PBT, various flights were observed with combinations of laser wavelength: 1064 nm and pulse width: 2 ns, 20 ns, etc. In particular, transparent PC, either 532 nm or 1064 nm, has a high transmittance with less absorption of heat, and presumably a mechanism different from the conventional LIFT works.

The droplets landing variation at the 0.5-mm gap position at the modeling expected position in this case is illustrated by a histogram in Fig. 6.

As can be understood from this result, 76% of the particles land in a range of ±50 µm, which is sufficient for performing modeling at an accuracy of ±100 µm, for example. Since the final shape is determined by the position accuracy of the laser for melting, a slight amount of powder deviating from the melting portion is removed after the modeled object is modeled.

Any laser light source may be used for the laser for flying 115, and those capable of generating picosecond to nanosecond pulses are preferable. Examples of solid lasers include YAG laser and titanium-sapphire laser. Examples of gas lasers include argon laser, helium-neon laser, and carbon dioxide gas laser. Semiconductor lasers are preferable because of their compactness. Fiber lasers are the most suitable light source for commercializing the present invention, because of their high peak energy and the possibility of size reduction.

The wavelength of the laser for melting can be selected as appropriate, preferably 300 nm or more and 11 µm or less, because if so, there are a wide selection of light sources. In particular, when the modeling material 201 is resin, the vicinity of 2460 nm is a composite absorption band of CH-CC bonds that almost all the resins have, and the absorption coefficient is 80% or more in a variety of resins including those containing carbon. With wavelengths of 2300 nm to 2500 nm, the absorption coefficient is 65% or more. Also in this range, energy for stable flight and melting can be applied. Similarly, the vicinity of 3400 nm that is the absorption band of CC bonds and its overtone band of the vicinity of 1700 nm are also preferable.

In this wavelength band, the transmittance of normal glass is also high and therefore it is easy to combine with a base material.
The pulse frequency of the laser can be selected as appropriate in combination with the scan speed of the laser. When there are many beam diameter overlaps, which are determined by their combination, the laser strikes even on the powder (modeling material) after flight, and the powder tends to dissipate. When the beam diameter overlaps twice or more, this tendency is conspicuous, whereas when overlapping 1.2 to 1.7 times, dissipation of powder is small.

Inside the carrier 111, a laser for melting 116 is disposed as an energy applying unit configured to apply energy to the surface of the modeled object 200. The laser for melting 116 need not actively use pulses, and continuous wave lasers are suitable.

The laser for melting 116 heats the surface of the modeled object 200 modeled on the stage 101 into a melted state. As long as a melted state is achieved by energy from one or more energy applying units, for example, convection, lamps, induction heating, and dielectric heating may be employed besides heating by a laser. As used herein "the surface" may be one layer formed by modeling at a time or a plurality of layers such as two or three layers. The surface may be a part of each layer or the entire layer. In other words, it is important that a part of the outermost surface is included.

Laser light 116a of the laser for melting 116 is emitted to be targeted at the radiation position (the droplet landing position of the modeling material 201) of the pulse laser light 115a of the laser for flying 115 in Fig. 1. Their position can be adjusted, and the adjusted position may be changed depending on, for example, the kind of material and the modeling speed.

With this configuration, the modeling material 201 flown by the laser for flying 115 lands on the surface of the modeled object 200 melted by the laser light 116a of the laser for melting 116 and adheres to the modeled object 200.

The chronological relation between the start timings of flight of the modeling material 201 and melting of the modeled object 200 is not limited. That is, the surface of the modeled object 200 may be melted before the modeling material 201 flies. Alternatively, after the modeling material 201 flies, the surface of the modeled object 200 may be melted and the flying modeling material 201 may land on the melted surface.

Variations in landing position and deficiency and excess can be adjusted among layers, and although the laser for flying 115 may differ from the modeling shape, the modeling shape is determined by the laser for melting 116.

On the periphery of the carrier 111, a cleaning blade 117 for removing the modeling material 201 left on the carrier 111 is provided on the downstream side in the rotation direction of the carrier 111 with respect to the region where the modeled object 200 is modeled. The modeling material 201 scraped off by the cleaning blade 117 is recovered in a recovery case 118.

Referring now to the flowchart in Fig. 7, the effect of this three-dimensional modeling apparatus 100 will be described.

Upon start of modeling operation, the supply unit 112 rubs and scrubs the modeling material 201 in the mesh roller 121 with the blade 122 (step S1, hereinafter simply denoted as "S1"), allows the modeling material 201 to pass through the mesh (S2), and places the modeling material 201 on the peripheral surface of the carrier 111 so as not overlap (S3). The supply unit 112 keeps supply to the carrier 111 until the modeling is completed (S4).

In this way, the modeling material 201 is supplied to the peripheral surface of the carrier 111 by the supply unit 112, so that the modeling material 201 is carried on the surface of the carrier 111 disposed above the stage 101 supporting the modeled object 200.

Then, transportation to above the stage 101 is performed through rotation of the carrier 111, and the top of the modeling material 201 is formed above the stage 101.

At the modeling start timing (S5), the laser for melting 116 emits the laser light 116a to heat and melt a portion of the modeled object 200 to which the modeling material 201 is to be attached (S6). In the first layer after starting the modeling, the modeling material 201 is fused by the temperature of the stage-heating heater 102.

The laser for flying 115 then irradiates the modeling material 201 with the pulse laser light 115a as predetermined in accordance with modeling data to allow the modeling material 201 carried on the carrier 111 to fly toward the melted portion of the modeled object 200 (S7).

The modeling material 201 flying from the carrier 111 lands on the surface of the modeled object 200 in a melted state to incorporate into the modeled object 200, so that the modeled object 200 is grown by at least one modeling material.

In this way, while the modeling material 201 is successively transported onto the stage 101 through continuous rotation of the carrier 111, the melting of the surface of the modeled object 200 by the laser for melting 116 and the flying and landing of the modeling material 201 by the laser for flying 115 are repeated until the modeling is completed (S8).

In this way, the modeled object 200 is grown to a predetermined shape whereby a three-dimensional modeled object can be modeled.

In doing so, the flown modeling material 201 lands on and adheres to the surface of the melted modeled object 200 but does not diffuse due to collision, so that an edge of the modeled object 200 can be produced at a high accuracy, thereby improving the modeling quality.

As previously mentioned, not only crystalline resins but also mixed resins of crystalline resin and non-crystalline resin can be used as the powder, and a wide variety of materials are ensured. In addition, continuous modeling can increase the modeling speed and can reduce the material waste.

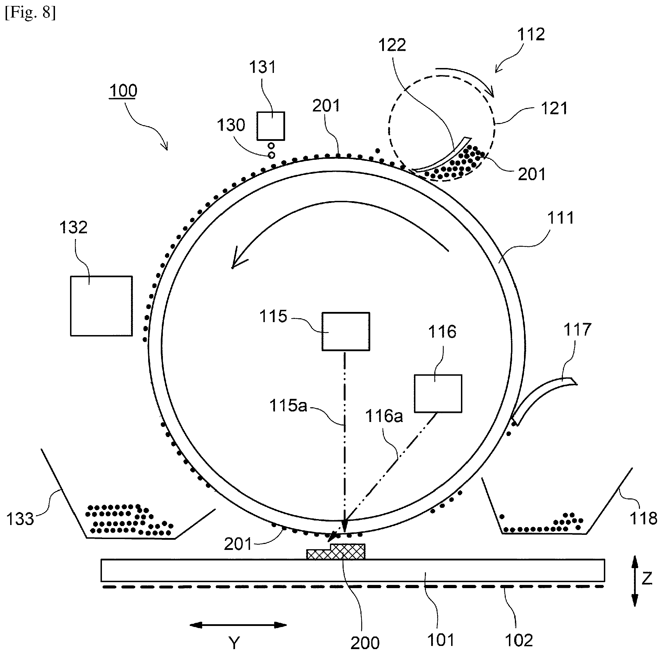

A second embodiment of the present invention will now be described with reference to Fig. 8. Fig. 8 is a diagram of an apparatus configured to model a three-dimensional modeled object according to the present embodiment.

In the present embodiment, a head 131 configured to eject and apply a liquid 130 to the modeling material 201 is disposed on the periphery of the carrier 111 in the foregoing first embodiment and between the supply unit 112 and the position to which the modeling material 201 is flown (modeling position).

On the downstream side of the head 131 in the powder transportation direction (rotation direction of the carrier 111), a suction unit 132 is disposed to suck and recover the modeling material 201 to which the liquid 130 is not applied. A tank 133 is provided to store therein the modeling material 201 recovered by the suction unit 132.

In this way, the liquid 130 is applied to the modeling material 201 by the head 131 to produce capillary force between the modeling materials 201 and between the carrier 111 and the modeling material 201, whereby the modeling material 201 can be more stably carried on the peripheral surface of the carrier 111 and transported to the modeling position.

In doing so, the head 131 is actuated in accordance with modeling data to select a region to apply the liquid 130, whereby an image of the modeling material 201 can be formed on the carrier 111 in accordance with the modeling data. A colorant and/or an additive may be added to the liquid ejected from the head 131 to add a color or impart a function. A multi-color head may be used as the head 131 to impart a predetermined color.

When capillary force is applied overall without image formation with the modeling material 201, mist from an ultrasonic humidifier may be sprayed to enable more stable transportation to the modeling position.

When Van der Waals force and/or powder resistance is high, the electrostatic adhesion force alone enables transportation to the flight section.

The suction unit 132 sucks and removes the modeling material 201 not carried on the surface of the carrier 111 by capillary force. The suction unit 132 is capable of electrostatic suction as well as reduced pressure suction except for highly conductive powder and may use them in combination. The sucked modeling material 201 is free from liquid and therefore can be resupplied into the supply unit 112.

The liquid 130 will now be described. Water is used as the liquid 130. A minute amount of thickener such as glycerin or polyethylene glycol may be contained for viscosity adjustment.

However, in some resins that compose the modeling material 201, even a minute amount of water should be avoided due to hydrolysis. In such a case, a liquid that is fire-retardant and has no effect on the material, for example, a hydrogen fluoride-based solvent can be chosen. For example, the tradename: Fluorinert (registered trademark) manufactured by 3M Company or the tradename: Galden (registered trademark) manufactured by Solvay can be selected depending on boiling points. When a hydrogen fluoride-based solvent is decomposed by laser heating, an absorber such as calcium carbonate that absorbs hydrofluoric acid is arranged in an exhaust path.

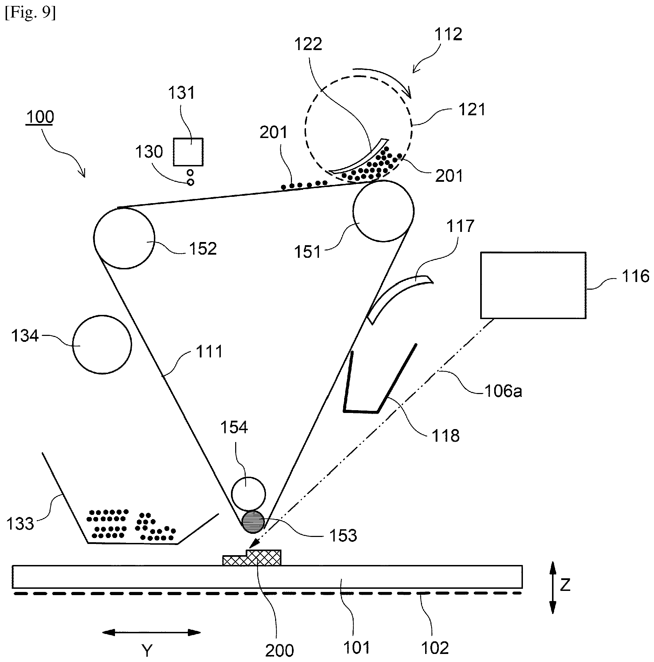

A third embodiment of the present invention will now be described with reference to Fig. 9. Fig. 9 is a diagram of an apparatus configured to model a three-dimensional modeled object according to the present embodiment.

In the present embodiment, the carrier 111 is formed with an endless belt that is a rotating member that circulates. For example, a nickel belt is used for the carrier 111.

The carrier 111 is looped around rollers 151, 152 and a heating roller 153 as a heating unit. Here, the heating roller 153 is disposed above the stage 101 at a position where the modeled object 200 is modeled (modeling position).

On the back of the heating roller 153, a backup roller 154 is disposed. The backup roller 154 reduces looseness of the endless belt caused by the small diameter of the heating roller 153.

A recovery roller 134 is a bias roller, and recovers the modeling material 201 by a bias electric field and drops the recovered modeling material to the tank 133.

In the present embodiment, the heating roller 153 is heated to, for example, 150°C, and the contact section between the carrier 111 and the heating roller 153 reaches a temperature exceeding 100°C to release the capillary force by water on the modeling material 201 carried on the carrier 111 (bumping). The heating roller 153 has a relatively small diameter, and the modeling material 201 is released from the capillary force also by centrifugal force. The modeling material 201 is thus flown from the carrier 111 toward the modeled object 200, for example, at a moving speed of the carrier 111 of 300 mm/s.

In brief, in the present embodiment, the flying unit configured to fly the modeling material 201 from the carrier 111 includes the heating roller 153 and an element configured to rotate the carrier 111, and the modeling material 201 is flown from the peripheral surface of the carrier 111 by bumping and centrifugal force. More specifically, inertial force involved with the movement of the carrier 111 also acts, so that the landing position is ahead of the position immediately below the flight position, in the carrier moving direction.

On the other hand, the section to which the modeling material 201 of the modeled object 200 adheres is melted into a melted state by the laser for melting 116, as in the foregoing first embodiment.

The modeling material 201 flying from the carrier 111 then adheres to the melted portion of the modeled object 200 to grow the modeled object 200.

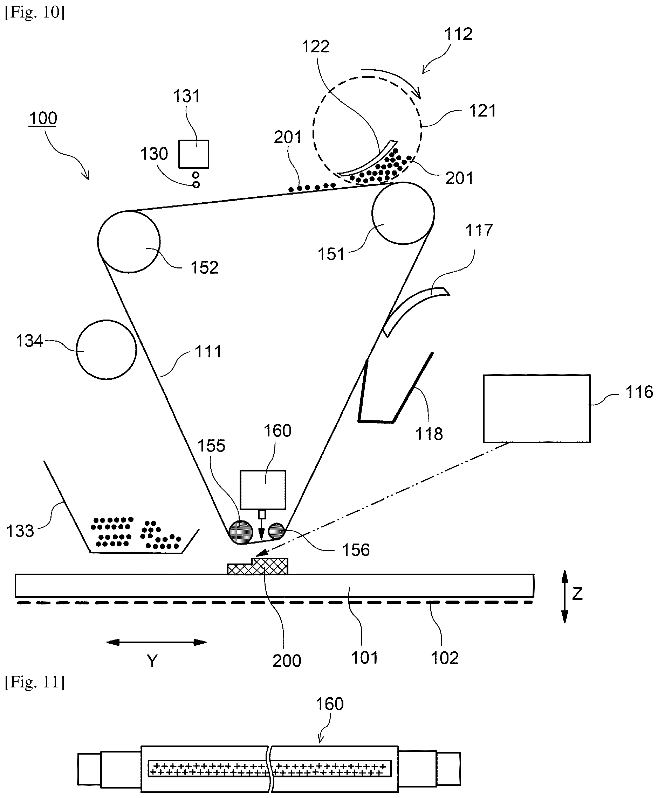

A fourth embodiment of the present invention will now be described with reference to Fig. 10 and Fig. 11. Fig. 10 is a diagram of an apparatus configured to model a three-dimensional modeled object according to the present embodiment, and Fig. 11 is a diagram of a multi-air nozzle of the apparatus.

In the present embodiment, the carrier 111 is formed with an endless mesh belt.

The carrier 111 is looped around rollers 151, 152 and rollers 156, 157. A multi-air nozzle 160 is disposed between the rollers 156 and 157 and above the stage 101 at a position where the modeled object 200 is modeled (modeling position).

Air is fed from a supply source to the multi-air nozzle 160. Air is blown from a nozzle 160a to the carrier 111 formed of a mesh belt, so that the modeling material 201 is pneumatically flown from the carrier 111.

Although powder image formation before flight uses inkjet, negatives may be removed by a laser as in other embodiments. When the multi-air nozzle itself has a configuration like inkjet capable of individual control with a microcavity structure, preliminary image formation is not necessary and a powder jet configuration can be implemented.

The section to which the modeling material 201 of the modeled object 200 adheres is heated by the laser for melting 116 and melted, as in the foregoing first embodiment.

The modeling material 201 flying from the carrier 111 then adheres to the melted portion of the modeled object 200 to grow the modeled object 200.

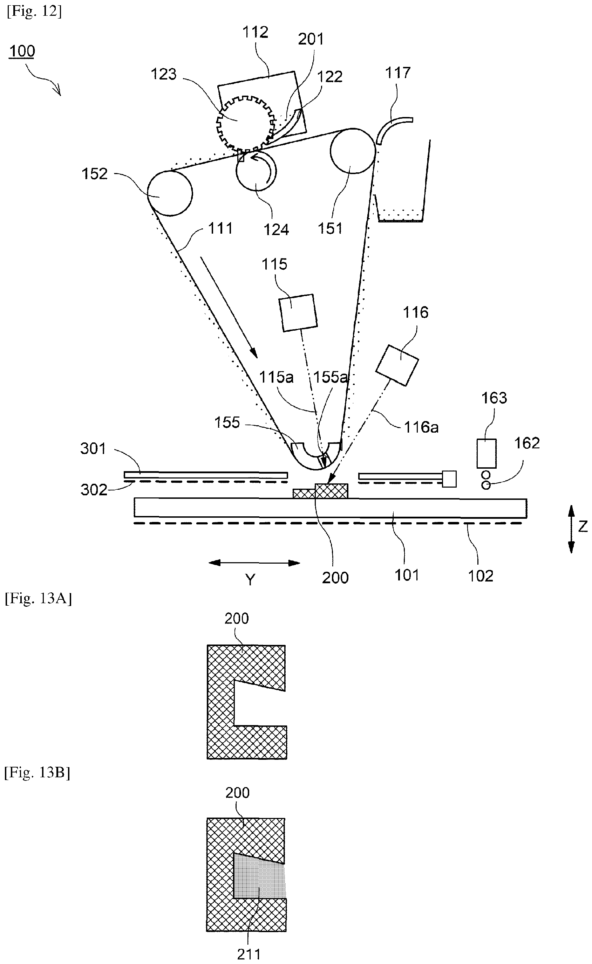

A fifth embodiment of the present invention will now be described with reference to Fig. 12. Fig. 12 is a diagram of an apparatus configured to model a three-dimensional modeled object according to the present embodiment.

In the present embodiment, the carrier 111 is formed with an endless belt that is a rotating member that circulates. The carrier 111 is formed of, for example, a PET film (Lumirror manufactured by Toray Industries, Inc.). Alternatively, the carrier 111 may be formed of a polyimide film (Kapton H manufactured by Toray Industries, Inc.). These films are industrially mass-produced and can be used as endless belts. Alternatively, a long-film roll may be used as it is and repeatedly used roll-to-roll.

The carrier 111 is looped around rollers 151, 152 and a fixed member 155. Here, the fixed member 155 is disposed above the stage 101 at a position where the modeled object 200 is modeled (modeling position).

A knurled roller may be used as a supply roller 123 of the supply unit 112, and an abutment roller 124 having a rubber layer on its surface is disposed to face the supply roller 123.

The fixed member 155 allows the pulse laser light 115a of the laser for flying 115 to irradiate the carrier 11 at an incident angle of 20 degrees through a slit 155a.

A coating device 163 is disposed to eject and apply a coating liquid. The coating device 163 ejects, for example, a heat-resistant and water-soluble liquid 162 such as magnesium sulfate which is deposited by heating. This configuration improves the support removability at the interface of the modeled object 200. The coating liquid may be a low-viscosity liquid, or a slurry-like or heated and melted resin may be employed.

Referring now to Figs. 13A to 13D(a1, a supporting method in modeling a complicated shape may be described.

As illustrated in Fig. 13A, a C-shaped modeled object 200 is modeled. In doing so, as illustrated in Fig. 13B, a supporting member 211 is used, which supports the upper portion of the modeled object 200 and can be easily removed after modeling.

When a support portion is formed with the supporting member 211, only the laser for flying 115 is activated and the laser for melting 116 is not activated. The height of powder can be adjusted by the frequency of flight and may be predicted and set in modeling data in advance or may be corrected while the shape is measured during modeling.

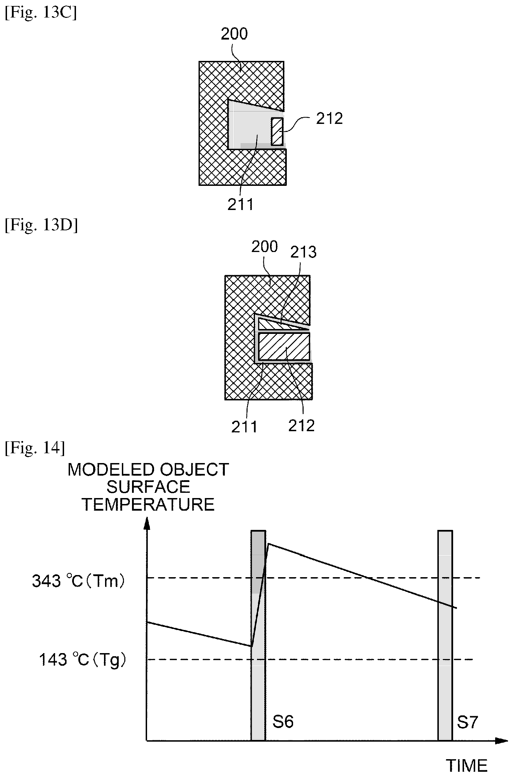

As illustrated in Figs. 13(c) and 13(d), in consideration of the possibility that a supporting member 201b collapses and the accuracy, modeled objects 212 to 214 are formed in a part of the supporting member 211 and removed after modeling.

A sixth embodiment of the present invention will now be described with reference to Fig. 14. Fig. 14 is a diagram serving to illustrate a surface temperature of a modeled object being modeled in the apparatus configured to model a three-dimensional modeled object according to the present embodiment.

The apparatus configuration and the modeling operation in the present embodiment are similar to those in the first embodiment. The apparatus configuration in the second to fifth embodiments may be employed.

In the present embodiment, PEEK which is a crystalline resin is used as a modeling material (material of the modeled object 200) 201. Any other crystalline resins may be used.

Fig. 14 illustrates change in surface temperature over time after the start of modeling of the modeled object 200. S6 in Fig. 14 indicates the timing of step S6 (laser radiation for melting) and step S7 (laser radiation for flying) in Fig. 7.

In the present embodiment, as illustrated in Fig. 14, the surface of the modeled object 200 irradiated with the laser light 116a by the laser for melting 116 at step S7 and having the temperature increased is kept at 143°C, which is the transition temperature Tg, or higher when the modeling material 201 flown by the laser for flying 115 reaches (impinges on) the surface and is deposited.

The temperature of the surface of the modeled object 200 is set to the glass transition temperature Tg or higher, whereby the surface of the modeled object 200 becomes rubbery, and when the flying modeling material 201 impinges on the modeled object 200, the surface of the modeled object 200 is deformed to absorb kinetic energy of the modeling material 201.

In comparison, it is not preferable that the temperature of the surface of the modeled object 200 is lower than the glass transition temperature Tg, because if so, when the flying modeling material 201 impinges on the modeled object 200, the surface of the modeled object 200 is not sufficiently deformed and is unable to sufficiently absorb kinetic energy of the modeling material 201.

In this configuration, when the modeling material 201 impinges on (reaches) the surface of the modeled object 200, the modeling material 201 less bounces and the modeling material 201 less scatters, whereby the size accuracy and the surface property of the modeled object 200 are improved, thereby improving the modeling quality.

In this case, the temperature of the surface of the modeled object 200 is preferably the crystallization temperature (Tc) or higher when PEEK is used as the modeling material 201, 300°C or higher is preferable. This temperature can suppress local occurrence of warpage due to rapid shrinkage involved with crystallization at the time of temperature drop and can yield a three-dimensional modeled object having a stable shape.

In order to keep the surface temperature of the modeled object 200, as illustrated in Fig. 1, the modeled object-heating heater 302 serving as an energy applying unit configured to apply energy to the modeled object 200 is disposed over the stage 101. The modeled object-heating heater 302 is formed of a planar resistance heating element to keep the ambient temperature around the modeled object 200 at 143°C, which is the glass transition temperature Tg of the modeling material 201, or higher.

Air is blown between the heat insulation plate 301 and the stage 101, for example, by a fan to keep the ambient temperature uniform.

A temperature sensor may be disposed in the surroundings of the modeled object-heating heater 302 or the modeled object 200 to perform temperature regulation such that the ambient temperature around the modeled object 200 is kept constant. Keeping the ambient temperature high can suppress scattering of the modeling material 201 when the modeling material 201 impinges on the modeled object 200 and, in addition, reducing the temperature gradient inside the modeled object 200 after modeling can suppress warpage.

The modeled object-heating heater 302 raises the ambient temperature around the modeled object 200 such that the temperature of the modeling material 201 before being flown by the laser for flying 115 (in the carried state) is also kept at 143°C, which is the glass transition temperature Tg, or higher.

This configuration can reduce energy applied by the laser for melting 116, thereby achieving higher speed and power saving.

On the other hand, the modeling material 201 before being flown by the laser for flying 115 may be lower than 143°C, which is the glass transition temperature Tg. It is preferable to make an adjustment such that the modeling material 201 does not become rubbery, whereby the attaching force to the carrier 111 is kept to a certain level or lower to facilitate flight of the modeling material 201.

As illustrated in Fig. 14, at step 6, the temperature of the surface of the modeled object 200 is lower than 343°C which is the melting point Tm before radiation of the laser light 116a by the laser for melting 116 and is 343°C or higher after radiation of the laser light 116a.

The temperature is set to the melting point Tm or higher after radiation of the laser light 116a by the laser for melting 116, whereby the modeled object 200 becomes liquid, and the melted modeling material 201 is bonded together to form a modeled object with high strength. If the temperature is lower than the melting point Tm even after radiation, the modeling material 201 is unable to be sufficiently bonded to the modeled object 200.

On the other hand, the temperature is set to be lower than melting point Tm before radiation of the laser light 116a by the laser for melting 116 to prevent the modeled object 200 from entirely melting and collapsing and keep a certain size accuracy.

The temperature increase of the surface of the modeled object 200 by the laser for melting 116 is set to 50°C, such a degree that warpage due to local deformation of the modeled object does not occur.

The modeled object-heating heater 302 is used as an energy applying unit configured to apply energy to (keep) the temperature of the surface of the modeled object 200 to the glass transition temperature Tg or higher. However, embodiments are not limited thereto.

For example, output or radiation time of the laser for melting 116 or the time interval between the laser light 116a from the laser for melting 116 and radiation of the laser light 115a from the laser for flying 115 can be adjusted by controlling the lasers.

For example, when the time interval is adjusted, the time interval may be determined to such an extent that the temperature does not fall below the glass transition temperature Tg during the course of temperature decrease as heat is transferred to the inside of the modeled object 200 or the atmosphere after the surface of the modeled object 200 is irradiated with the laser light 116a from the laser for melting 116 and the surface temperature of the modeled object 200 exceeds the melting point.

The time interval at which the modeling material is flown will now be described.

When the modeling material 201 flies and impinges on the surface of the modeled object 200, heat is transferred from the modeled object 200 to increase the temperature of the modeling material 201. If this heat transfer is insufficient, the surface temperature of the modeling material 201 is not sufficiently increased when the modeling material 201 subsequently impinges on the same position, and there is a possibility that the temperature does not reach the glass transition temperature Tg.

In order to obtain a sufficient heat transfer time, when the average particle diameter of the modeling material 201 is L [µm], the time interval from when the modeling material 201 flies to reach the surface of the modeled object 200 to when the modeling material 201 subsequently flies to the same position to reach the surface of the modeled object 200 is set to L × L/200 [ms] or longer. It is not preferable that the time interval is shorter than L × L/200 [ms], because if so, heat of the particle reaching the surface is not sufficiently diffused and the particle is not entirely melted.

The threshold of the time interval was derived using the threshold L²/α for achieving uniform temperature of a material with a thickness L and a thermal diffusivity α (corresponding to a time constant RC in an RC circuit) and α = 2.0 × 10⁻⁷[m²/s] in common resin materials. When L = 50 [µm], a time interval of 12.5 [ms] or longer is necessary, and based on this, for example, the time interval for flying the modeling material 201 is set to 20 [ms].

With this time interval, when the modeling material 201 flies and impinges on the surface of the modeled object 200, a sufficient time is ensured for heat to be transferred from the modeled object 200 to increase the temperature of the modeling material 201, thereby improving the modeling quality.

Specific examples will now be described with reference to Table 1.

### <Example 1-1 to Example 1-6>

As illustrated in Table 1, PEEK (Examples 1-1 and 1-2), PA12 (Examples 1-3 and 1-4), and PBT (Examples 1-5 and 1-6) were used as the resin (modeling material 201). Then, the surface temperature of the modeled object 200 before heating was set to a temperature lower than the melting point, and the surface temperature when the heated resin reaches the surface (arrival surface temperature) was set to the glass transition temperature Tg or higher (Examples 1-1, 1-3, and 1-5) or the crystallization temperature Tc or higher (Examples 1-2, 1-4, and 1-6). The time interval for flying the resin was "L × L/200 [ms]" or longer, 0.1 s, in any case.

The ambient temperature was set to 25°C in any case. The temperature was measured using the product name FT-H20 manufactured by KEYENCE CORPORATION. The time interval was measured using the product name NR-500 manufactured by KEYENCE CORPORATION.

The melted state was evaluated for Example 1-1 to Example 1-6, and the evaluation results are illustrated in Table 1. The evaluation result "Good" indicates that the modeling material was melted, and the modeled object and the modeling material were bonded.

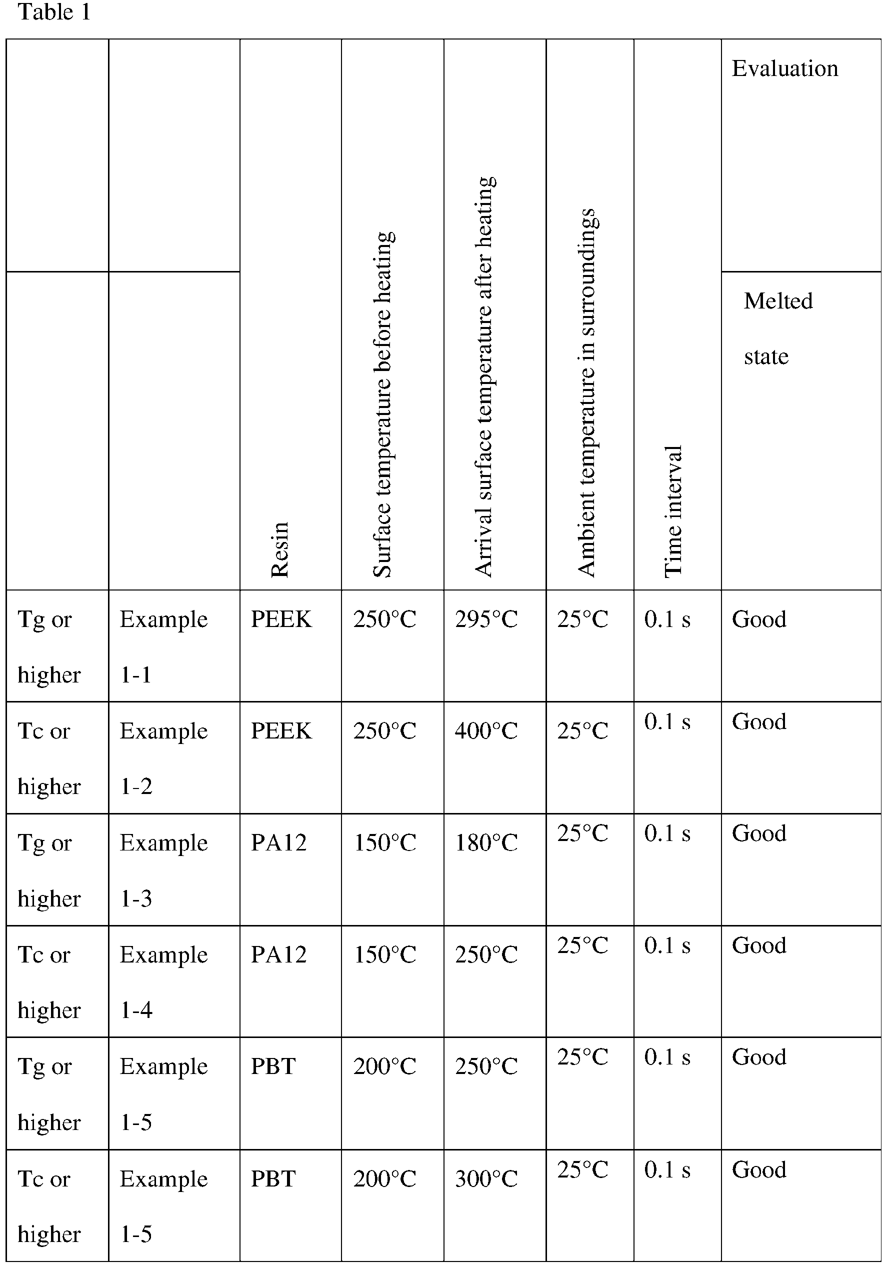

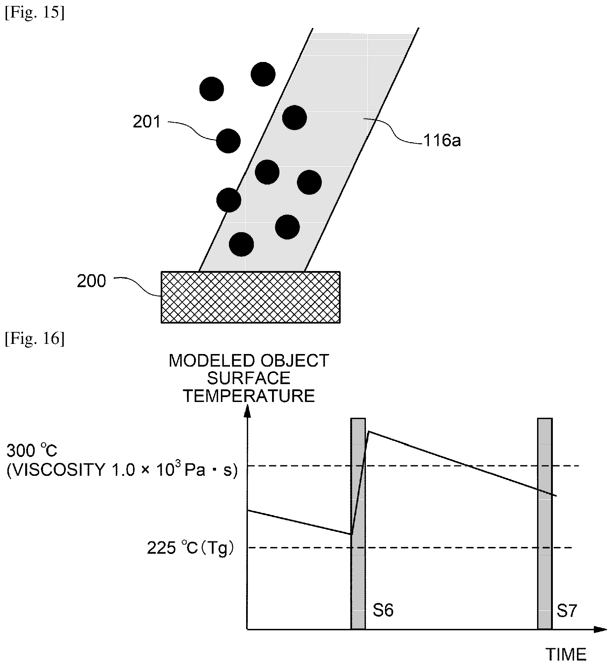

Heating the modeling material during flight will now be described with reference to Fig. 15. Fig. 15 is a diagram illustrating the relation between a flying modeling material and a radiation region by the laser for melting (laser light region).

The laser light 116a irradiates the surface of the modeled object 200 and is obliquely incident to pass above the modeled object 200.

Here, when the laser for melting 116 is emitting the laser light 116a, the modeling material 201 flies and lands on the surface of the modeled object 200.

In this way, the modeling material 201 is directly irradiated during flight with the laser light 116a of the laser for melting 116, whereby not only the surface of the modeled object 200 but also the modeling material 201 can be heated simultaneously.

Accordingly, the landing modeling material 201 itself attains the glass transition temperature Tg or higher, or the temperature at the time of impingement on the modeled object 200 increases, whereby the surface of the modeled object 200 is deformed at the time of impingement on the modeled object 200 and absorbs kinetic energy.

Thus, the modeling material 201 less bounces when impinging on the surface of the modeled object 200, and the modeling material 201 less scatters, whereby the size accuracy and the surface property of the modeled object 200 are further improved, thereby improving the modeling quality.

A seventh embodiment of the present invention will now be described with reference to Fig. 16. Fig. 16 is a diagram serving to illustrate the surface temperature of a modeled object being modeled in the apparatus configured to model a three-dimensional modeled object according to the present embodiment.

The apparatus configuration and the modeling operation in the present embodiment are similar to those in the first embodiment. The apparatus configuration in the second to fifth embodiments may be employed.

In the present embodiment, PES which is a non-crystalline resin is used as the modeling material 201. Any other non-crystalline resins may be used.

The modeling material 201 does not have a melting point when it is a non-crystalline resin. Therefore, a similar operation effect to that of the foregoing sixth embodiment is unable to be defined by the temperature of the surface of the modeled object 200 before and after radiation of the laser for melting 116.

Then, in the present embodiment, the effect is defined based on the viscosity of resin.

The viscosity of resin is 1.0 × 10³ Pa • s or higher before radiation of the laser light 116a from the laser for melting 116, whereas the viscosity is set to be lower than 1.0 × 10³ Pa • s after radiation of the laser light 116a. That is, the viscosity is lower than 1.0 × 10³ Pa • s after the surface of the modeled object 200 is heated by the energy applying unit, and the viscosity is 1.0 × 10³ Pa • s or higher before heating.

Specific examples will now be described with reference to Table 2.

### <Example 2-1>

PES was used as the resin (modeling material 201), and the temperature was set to 250°C before radiation of laser light and 360°C after radiation. In this case, the viscosity before radiation was 3.0 × 10³ Pa • s and 6.0 × 10² Pa • s after radiation.

### <Example 2-2>

PVC was used as the resin (modeling material 201), and the temperature was set to 50°C before application of energy of laser light and 150°C after application. In this case, the viscosity before radiation was 4.0 × 10³ Pa • s and after radiation 5.0 × 10² Pa • .

The temperature was measured using the product name FT-H20 manufactured by KEYENCE CORPORATION. The viscosity was measured according to JIS8803:2011.

The melted state was evaluated for Examples 2-1 and 2-2, and the evaluation results are illustrated in Table 2. The sign "Good" in the evaluation result indicates that the modeling material is melted, and the modeled object and the modeling material are bonded.

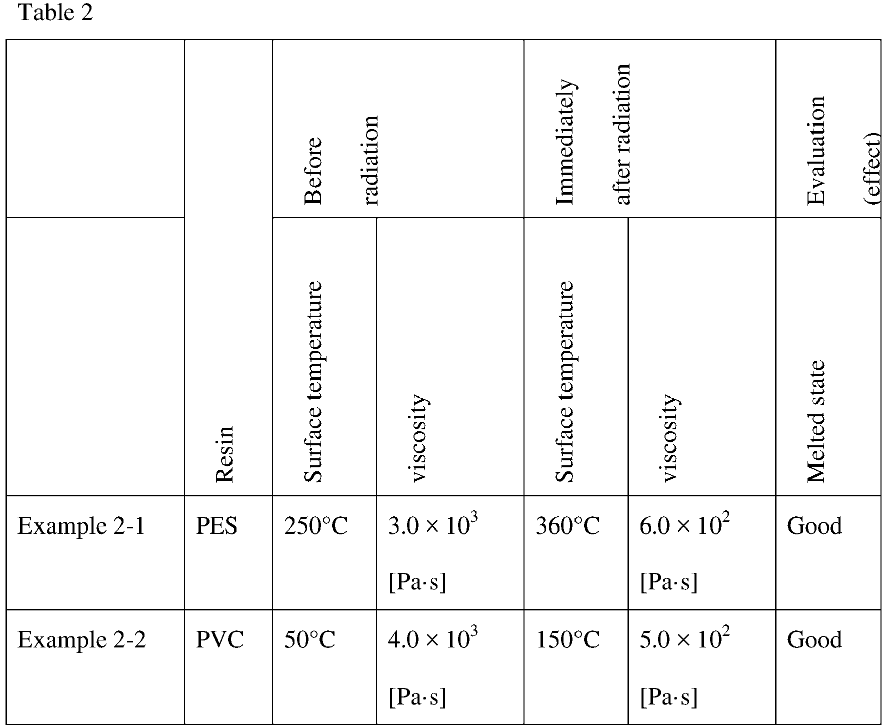

According to these examples, for a non-crystalline resin having no melting point, the modeled object 200 becomes soft after radiation of the laser light 116a from the laser for melting 116, and the powder is bonded together, whereby a modeled object with a high strength can be formed, as in the foregoing sixth embodiment. The temperature is set to be lower than the melting point before radiation of laser light by the laser for melting 116 to prevent the modeled object 200 from entirely being softened and collapsing and keep a certain size accuracy.

The foregoing embodiments in which layers are deposited in a contactless manner can solve almost all the problems associated with the selective thermoplastic electrophotographic process (STEP) and the like. For example, in the method in which the melted resin is brought into contact with a modeled object and deposited, offset or roughness tends to occur at the interface, and the material is limited in terms of strict control of temperature, time increase, and melting viscosity. Moreover, conductive resins are not available due to the use of static electricity. These problems, however, are eliminated by the contactless deposition.

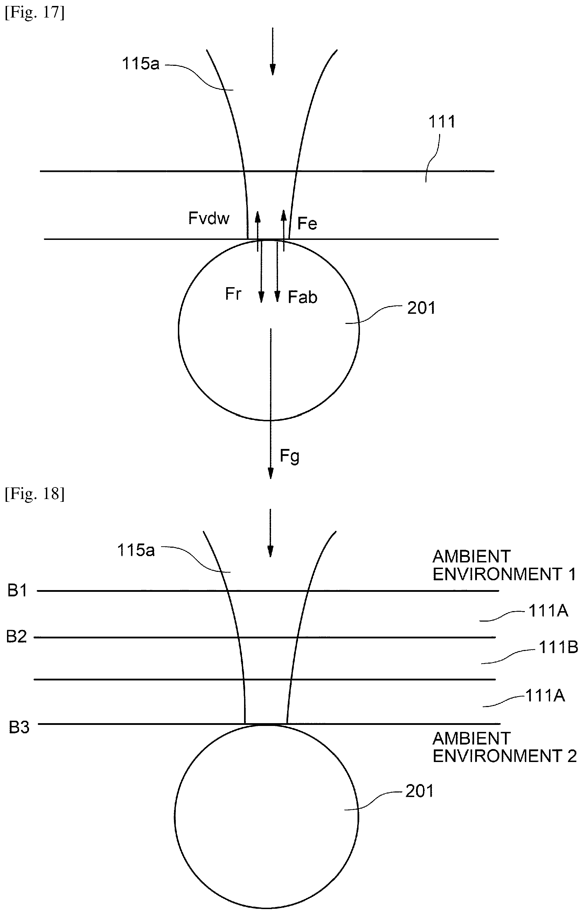

An eighth embodiment of the present invention will now be described with reference to Fig. 17. Fig. 17 is a diagram of an apparatus configured to fly particles according to the present embodiment.

In the present embodiment, an apparatus configured to fly particles is applied to the apparatus configured to model a three-dimensional modeled object according to the foregoing first embodiment.

The laser for flying 115 is provided as an irradiating unit configured to irradiate the carrier 111 with the laser light 115a on the opposite surface to a surface on which the modeling material 201 is held, in a state in which the modeling material 201 that is a particle is held on the surface of the carrier 111 by attraction force Fv as illustrated in Fig. 17.

The laser for flying 115 emits the laser light 115a in the form of pulse light having a pulse width of 10 µs or shorter. The pulse width may be 8 µs, may be 5 µs or shorter, or may be 2 µs. It has been confirmed that even nanoseconds or picoseconds are workable. Radiation at a pulse width longer than 10 µs is not preferable because if so, thermal diffusion in the modeling material is on the order of µm or more, and the force to the material is not transferred.

Here, in Fig. 17, "Fg" is the gravity exerted on the modeling material 201 (particle). This is typically calculated by multiplying the weight expressed by the product of volume and density of a modeled object by acceleration of gravity. When the modeling material 201 was PA12 smooth (volume average particle diameter is 38 µm) manufactured by Siterit, the gravity Fg was about 10⁻¹⁰ N.

"Fvdw" is Van der Waals force exerted on the modeling material 201. This was about 10⁻⁷ N according to calculation.

"Fe" is the electrostatic attraction force of the modeling material 201. This is known to be the force on the order of about 10 N in the case of a carrier material in a printer with an equivalent size and depends on the quantity of charge of the modeling material 201 (particle, powder).

The above is obtained by calculation, and the adhesion force Fv that is the sum of Fvdw and Fe can be experimentally obtained by an adhesion force test using a centrifugal separator. Similarly, when determined using PA12 smooth manufactured by Siterit in an adhesion force test, Fg was about 10⁻⁸ N.

Another possible component of Fvdw is capillary force produced when liquid is included between the modeling material 201 (particle) and the carrier 111.

"Fr" is a force exerted on the modeling material 201 by radiation pressure. Fr can be determined by calculation. According to the calculation with pulse width 10 ps and pulse energy 1 µJ, the instantaneous force was about 10⁻⁴ N.

"Fab" is a force exerted on the modeling material 201 when the surface of the modeling material 201 is partially instantaneously vaporized due to laser ablation and pressure is produced at the time of ejection of gas.

For example, when a laser with a pulse width on the order of ps is used, a phenomenon commonly called ablation occurs in which the material is converted to gas and in some cases plasma. These are known to reach temperatures as high as several hundred thousand degrees. In this case, the ejection pressure can be thought to be by far larger than Fvdw.

Therefore, if energy of laser has energy enough to induce ablation, the force instantaneously exerted on the modeling material 201 far exceeds the adhesion force.

Whether the laser exceeds an ablation threshold for a modeled object is usually discussed in terms of whether the laser fluence Fll exceeds the threshold. The threshold here is hereinafter denoted as "fluence threshold".

Fluence Fll is calculated by dividing pulse energy J by the area of laser (J/cm² is the commonly used unit). In the case of a powder material, its fluence threshold Flth is typically 0.1 to 1.0 J/cm². This can be determined by radiating a bulk material of this material with laser.

This is the calculation expression in a case where a laser beam is a common Gaussian beam. Of course, the value varies from the center to the periphery of the beam, and in the case of other variant shapes of beams (doughnut beam and top-hat beam), a calculation expression corresponding to each individual beam has to be used.

Based on these, the attraction force Fvdw is composed of Van der Waals force, electrostatic force, and capillary force. When the gravity acting on a particle (modeling material 201) is Fg, Fv > Fg is set, so that the modeling material 201 can be carried on the carrier 111.

When the force exerted on the particle (modeling material 201) by radiation pressure is Fr, the input condition of laser light is set such that Fr > Fv - Fg in the vertical direction to the attraction surface to fly the particle.

Specific examples will now be described with reference to Table 3.

### <Example 3-1 to Example 3-3>

PA12 (Example 3-1), PE (Example 3-2), and PC (Example 3-3) were used as the resin, Fv > Fg was set, and Fr > Fv - Fg was set as the laser light input condition.

The flight state was observed for Example 3-1 to Example 3-3. The results are illustrated in Table 3.

**Table 3**

| | Resin | Particle diameter | Fg [N] | Fv [N] | Fr [N] | Fly or not |
|---|---|---|---|---|---|---|
| Example 3-1 | PA12 | 38 um | 3 × 10⁻¹⁰ | 8 × 10⁻⁶ | 2 × 10⁻³ | Fly |
| Example 3-2 | PE | 46 um | 6 × 10⁻¹⁰ | 1 × 10⁻⁵ | 2 × 10⁻³ | Fly |
| Example 3-3 | PC | 50 um | 7 × 10⁻¹⁰ | 1 × 10⁻⁵ | 2 × 10⁻³ | Fly |

When the fluence threshold of powder is Flth1, the fluence threshold of the carrier is Flth2, and fluence is Fl, the laser light condition is set such that Fl < Flth1 and Fl < Flth2 to fly the particle.

Here, it should be noted that a plurality of fluence thresholds exist. As illustrated in Fig. 18, when the carrier is formed with a plurality of layers, for example, with a sandwich structure of carrier 111A → carrier 111B → carrier 111A, it is assumed that the upper surface of one carrier 111A is ambient environment 1 and the lower surface of the other carrier 111A is ambient environment 2.

In this case, the carrier 111A and the carrier 111B may include, for example, a base material and a thin film layer adhering to its surface or may be a laminate of a plurality of base materials. It is possible that the surface shape is not flat and is irregular. The ambient environment may include an ambient environment such as air, nitrogen, and argon and temperature/humidity conditions.

The fluence threshold is known to vary depending on the material of a substance and ambient environment. In the case of Fig. 18, an interfacial boundary B1 of the carrier 111A in ambient environment 1, an interfacial boundary B2 between the carrier 111A and the carrier 111B, and an interfacial boundary B3 between the carrier 111A and ambient environment 2 have individually different fluence thresholds. The spot diameter of a laser beam also varies, and the fluence threshold not of the interfacial boundary but of the inside of the carrier also varies.

It should be noted that all these conditions are taken into consideration, and the condition of fluence should be selected with all of the possible fluence thresholds according to the laser condition.

The use of the apparatus configured to fly particles according to the present embodiment does not limit the particle (powder) to be flown. As previously mentioned, for example, particles (powder) of crystalline resins, non-crystalline resins, engineering plastics, metal materials, and ceramics can be flown.

As long as the particles can be attracted to the carrier, a three-dimensional modeled object can be modeled.

Here, it is preferable that the carrier 111 and the stage 101 on which a three-dimensional modeled object is modeled move in the same direction at the opposing sections.

The moving speed of the carrier is preferably higher than the moving speed of the stage. It is usually difficult for the carrier 111 to be completely filled with a powder material. The carrier 111 therefore needs to move at a higher speed in order that powder is supplied at a sufficient speed to the three-dimensional modeled object 101.

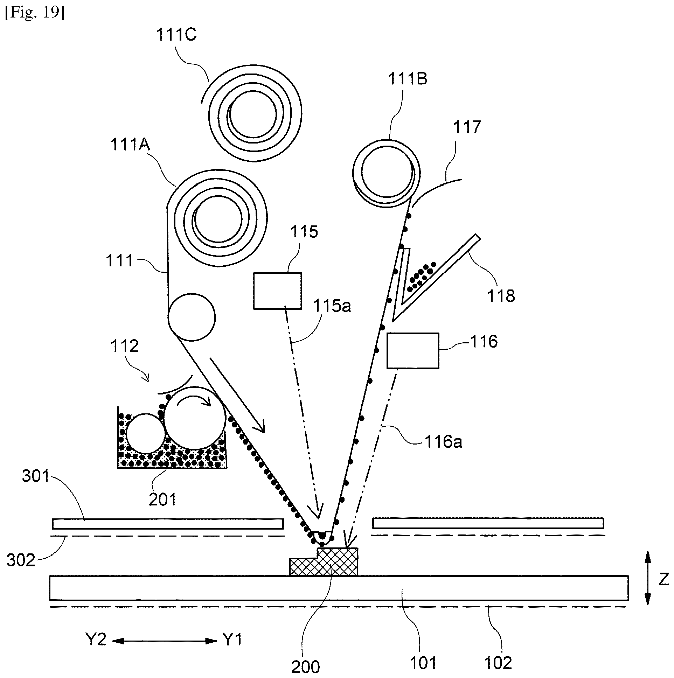

A ninth embodiment of the present invention will now be described with reference to Fig. 19. Fig. 19 is a diagram of an apparatus configured to model a three-dimensional modeled object according to the present embodiment.

In the present embodiment, the carrier 111 in the foregoing first embodiment is formed of a film. In use, the film serving as the carrier 111 is taken up from a feed roll 111A onto a take-up roll 111B.

When the carrier 111 fed from the feed roll 111A runs out, a supplementary feed roll 111C is used to bond and connect a film serving as the carrier 111. The modeling thus can be continued in a short time.

In the present embodiment, the laser light 116a of the laser for melting 116 is slightly away from the landing position of the modeling material 201 but can apply energy at an incident angle of 15 degrees.

The closer to zero degree the incident angle is, the less likely such a defect occurs that light is blocked, for example, by a foreign substance or an elevated portion due to insufficient melting when a complicated shape is modeled.

When the stage 101 is moved in the Y1 direction, the surface of the modeled object 200 is melted and the material is landed. When the stage 101 is moved in the Y2 direction, the powder (modeling material 201) landing on the surface softened at Tg or higher is heated and melted.

### Reference Signs List

100 Apparatus configured to model a three-dimensional modeled object
101 Stage (supporting member)
111 Carrier
112 Supply unit
115 Laser configured to fly (flying unit)
116 Laser for melting (energy applying unit)
200 Modeled object
201 Powder
201 Modeling material (particle)
301 Heat insulation plate
302 Modeled object-heating heater (auxiliary energy applying unit)

## Claims

1. An apparatus (100) configured to model a three-dimensional modeled object (200), comprising:
a carrier (111) configured to carry a modeling material (201);
an energy applying unit (116) configured to apply laser energy to a surface of a modeled object (200); and
a flying unit (115) configured to fly, using laser light, the modeling material (201) carried on the carrier (111) toward the surface of the modeled object (200) while the energy is being applied to the surface,
**characterized in that**
the energy applying unit (116) is configured to heat the modelling material (201) until the modelling material (201) flying to the surface of the modeled object (200) reaches the surface of the modeled object (200).

2. The apparatus (100) configured to model the three-dimensional modeled object (200) according to claim 1, wherein the carrier (111) is a rotating member.

3. The apparatus (100) configured to model the three-dimensional modeled object (200) according to claim 1 or 2, wherein the flying unit (115) comprises one of a unit configured to emit a pulse laser, and a heating unit configured to heat the carrier (111) configured to circulate and the modeling material (201) carried on the carrier (111).

4. The apparatus (100) configured to model the three-dimensional modeled object (200) according to claim 1 or 2, wherein the flying unit (115) comprises a unit configured to blow air to the modeling material carried on the carrier.

5. The apparatus (100) configured to model the three-dimensional modeled object (200) according to any one of claims 1 to 4, further comprising a unit configured to apply a liquid to the modeling material (201) carried on the carrier (111) .

6. The apparatus (100) configured to model the three-dimensional modeled object (200) according to any one of claims 1 to 5, wherein temperature of the surface of the modeled object (200) is glass transition temperature Tg or higher when the modeling material (201) reaches the surface of the modeled object (200).

7. The apparatus (100) configured to model the three-dimensional modeled object (200) according to any one of claims 1 to 6, wherein when the modeling material has an average particle diameter of L [µm], a time interval which the modeling material needs to reach the surface of the modeled object is L × L/200 [ms] or longer.

8. The apparatus (100) configured to model the three-dimensional modeled object (200) according to any one of claims 1 to 7, wherein
the modeling material (201) comprises a crystalline resin,
temperature of the surface of the modeled object (200) reaches a melting point of the modeling material or higher after heating by the energy applying unit (116).

9. The apparatus (100) configured to model the three-dimensional modeled object (200) according to any one of claims 1 to 8, wherein
the modeling material (201) comprises a non-crystalline resin, and
the surface of the modeled object has a viscosity lower than 1.0 × 10³ Pa·s after heating by the heating unit.

10. The apparatus (10) according to claim 1, configured to fly particles, comprising a laser light emitting unit configured to irradiate a surface of a carrier with laser light, the surface being opposite to a surface on which a particle is held, in a state in which the particles are held on the surface of the carrier by attraction force Fv, wherein
the laser light emitting unit is configured to emit the laser light at a pulse width of 10 µs or shorter.

11. The apparatus (100) configured to fly the particles according to claim 10, wherein
the attraction force Fv includes Van der Waals force, electrostatic force, and capillary force, and
when gravity acting on the particle is Fg, Fv > Fg.

12. The apparatus (100) configured to fly the particles according to claim 10 or 11, wherein when force exerted on the particle by radiation pressure is Fr, an input condition of the laser light is Fr > Fv - Fg in a vertical direction to an attraction surface.

13. The apparatus (100) configured to fly the particles according to any one of claims 10 to 12, further comprising a unit configured to move the carrier (111) in one direction.

14. A method of modeling a three-dimensional modeled object (200), comprising:
carrying a modeling material (201) on a surface of a carrier (111);
applying energy to a surface of a modeled object (200); and
flying the modeling material (201) carried on the carrier (111) to the surface of the modeled object (200) while the energy is being applied to the surface,
**characterized by**
heating the modelling material (201) until the modelling material (201) flying to the surface of the modeled object (200) reaches the surface of the modeled object (200).

## Patentansprüche

1. Vorrichtung (100), konfiguriert zum Modellieren des dreidimensional modellierten Objekts (200), die umfasst:
einen Träger (111), der zum Tragen eines Modelliermaterials (201) konfiguriert ist;
eine Energieaufbringungseinheit (116), die dazu konfiguriert ist, Laserenergie auf eine Oberfläche eines modellierten Objekts (200) aufzubringen; und
eine Flugeinheit (115), die dazu konfiguriert ist, das auf dem Träger (111) getragene Modelliermaterial (201) unter Verwendung von Laserlicht in Richtung der Oberfläche des modellierten Objekts (200) zu fliegen, während die Energie auf die Oberfläche aufgebracht wird,
**dadurch gekennzeichnet, dass**
die Energieaufbringungseinheit (116) so konfiguriert ist, dass sie das Modelliermaterial (201) erhitzt, bis das zur Oberfläche des modellierten Objekts (200) fliegende Modelliermaterial (201) die Oberfläche des modellierten Objekts (200) erreicht.

2. Vorrichtung (100), konfiguriert zum Modellieren des dreidimensional modellierten Objekts (200), nach Anspruch 1, wobei der Träger (111) ein rotierendes Element ist.

3. Vorrichtung (100), konfiguriert zum Modellieren des dreidimensional modellierten Objekts (200), nach Anspruch 1 oder 2, wobei die Flugeinheit (115) entweder eine Einheit umfasst, die zum Aussenden eines Impulslasers konfiguriert ist, oder eine Heizeinheit, die zum Erhitzen des zum Zirkulieren konfigurierten Trägers (111) und des auf dem Träger (111) getragenen Modelliermaterials (201) konfiguriert ist.

4. Vorrichtung (100), konfiguriert zum Modellieren des dreidimensional modellierten Objekts (200), nach Anspruch 1 oder 2, wobei die Flugeinheit (115) eine Einheit umfasst, die dazu konfiguriert ist, Luft auf das auf dem Träger getragene Modelliermaterial zu blasen.

5. Vorrichtung (100), konfiguriert zum Modellieren des dreidimensional modellierten Objekts (200), nach einem der Ansprüche 1 bis 4, die ferner eine Einheit umfasst, die zum Auftragen einer Flüssigkeit auf das auf dem Träger (111) getragene Modellierungsmaterial (201) konfiguriert ist.

6. Vorrichtung (100), konfiguriert zum Modellieren des dreidimensional modellierten Objekts (200), nach einem der Ansprüche 1 bis 5, wobei die Temperatur der Oberfläche des modellierten Objekts (200) die Glasübergangstemperatur Tg oder höher ist, wenn die Modelliermaterial (201) auf die Oberfläche des modellierten Objekts (200) gelangt.

7. Vorrichtung (100), konfiguriert zum Modellieren des dreidimensional modellierten Objekts (200), nach einem der Ansprüche 1 bis 6, wobei, wenn das Modellmaterial einen durchschnittlichen Partikeldurchmesser von L [µm] hat, ein Zeitintervall, welches das Modelliermaterial benötigt, um die Oberfläche des modellierten Objekts zu erreichen, L × L/200 [ms] oder länger sein muss.

8. Vorrichtung (100), konfiguriert zum Modellieren des dreidimensional modellierten Objekts (200,) nach einem der Ansprüche 1 bis 7, wobei
das Modelliermaterial (201) ein kristallines Harz umfasst,
die Temperatur der Oberfläche des modellierten Objekts (200) nach dem Erhitzen durch die Energieaufbringungseinheit (116) einen Schmelzpunkt des Modellierungsmaterials oder höher erreicht.

9. Vorrichtung (100), konfiguriert zum Modellieren des dreidimensional modellierten Objekts (200), nach einem der Ansprüche 1 bis 8, wobei
das Modellierungsmaterial (201) ein nichtkristallines Harz umfasst, und
die Oberfläche des modellierten Objekts nach dem Erhitzen durch die Heizeinheit eine Viskosität von weniger als 1,0 × 10³ Pa · s aufweist.

10. Vorrichtung (10) nach Anspruch 1, konfiguriert zum Fliegen von Partikeln, die eine Laserlicht emittierende Einheit umfasst, die dazu konfiguriert ist, eine Oberfläche eines Trägers mit Laserlicht zu bestrahlen , wobei die Oberfläche einer Oberfläche gegenüber liegt, auf der ein Partikel gehalten wird, und zwar in einem Zustand, in dem ein Partikel durch die Anziehungskraft Fv auf der Oberfläche des Trägers gehalten wird, wobei
die Laserlicht emittierende Einheit so konfiguriert ist, dass sie das Laserlicht mit einer Impulsdauer von 10 µs oder weniger emittiert.

11. Vorrichtung (100), die zum Fliegen der Partikel konfiguriert ist, nach Anspruch 10, wobei
die Anziehungskraft Fv die Van-der-Waals-Kraft, die elektrostatische Kraft und die Kapillarkraft umfasst, und
wenn die auf das Teilchen wirkende Schwerkraft Fg ist, Fv > Fg ist.

12. Vorrichtung (100), die zum Fliegen der Partikel konfiguriert ist, nach Anspruch 10 oder 11, wobei, wenn die durch den Strahlungsdruck auf das Partikel ausgeübte Kraft Fr ist, eine Eingangsbedingung für das Laserlicht Fr > Fv - Fg ist, in vertikaler Richtung auf eine Anziehungsfläche.

13. Vorrichtung (100), die zum Fliegen der Partikel konfiguriert ist, nach einem der Ansprüche 10 bis 12, die ferner eine Einheit umfasst, die zum Bewegen des Trägers (111) in einer Richtung konfiguriert ist.

14. Verfahren zum Modellieren eines dreidimensional modellierten Objekts (200), die umfasst:
das Tragen eines Modelliermaterials (201) auf einer Oberfläche eines Trägers (111);
das Aufbringen von Energie auf eine Oberfläche eines modellierten Objekts (200); und
das Fliegen des auf dem Träger (111) getragenen Modelliermaterials (201) zur Oberfläche des modellierten Objekts (200), während die Energie auf die Oberfläche aufgebracht wird,
**gekennzeichnet durch**
das Erhitzen des Modelliermaterials (201), bis das zur Oberfläche des modellierten Objekts (200) fliegende Modelliermaterial (201) die Oberfläche des modellierten Objekts (200) erreicht.

## Revendications

1. Appareil (100) configuré pour modéliser un objet modélisé en trois dimensions (200), comprenant :
un support (111) configuré pour porter un matériau de modélisation (201) ;
une unité d'application d'énergie (116) configurée pour appliquer de l'énergie laser à une surface d'un objet modélisé (200) ; et
une unité volante (115) configurée pour faire voler, en utilisant une lumière laser, le matériau de modélisation (201) porté sur le support (111) vers la surface de l'objet modélisé (200) tandis que l'énergie est appliquée à la surface,
**caractérisé en ce que en ce que**
l'unité d'application d'énergie (116) est configurée pour chauffer le matériau de modélisation (201) jusqu'à ce que le matériau de modélisation (201) volant vers la surface de l'objet modélisé (200) atteigne la surface de l'objet modélisé (200).

2. Appareil (100) configuré pour modéliser l'objet modélisé en trois dimensions (200) selon la revendication 1, dans lequel le support (111) est un élément rotatif.

3. Appareil (100) configuré pour modéliser l'objet modélisé en trois dimensions (200) selon la revendication 1 ou 2, dans lequel l'unité volante (115) comprend l'une parmi une unité configurée pour émettre un laser à impulsions, et une unité chauffante configurée chauffer le support (111) configuré pour circuler et le matériau de modélisation (201) porté sur le support (111).

4. Appareil (100) configuré pour modéliser l'objet modélisé en trois dimensions (200) selon la revendication 1 ou 2, dans lequel l'unité volante (115) comprend une unité configurée pour souffler de l'air sur le matériau de modélisation porté sur le support.

5. Appareil (100) configuré pour modéliser l'objet modélisé en trois dimensions (200) selon l'une quelconque des revendications 1 à 4, comprenant en outre une unité configurée pour appliquer un liquide sur le matériau de modélisation (201) porté sur le support (111).

6. Appareil (100) configuré pour modéliser l'objet modélisé en trois dimensions (200) selon l'une quelconque des revendications 1 à 5, dans lequel la température de la surface de l'objet modélisé (200) est la température de transition vitreuse Tg ou supérieure lorsque le matériau de modélisation (201) atteint la surface de l'objet modélisé (200).

7. Appareil (100) configuré pour modéliser l'objet modélisé en trois dimensions (200) selon l'une quelconque des revendications 1 à 6, dans lequel, lorsque le matériau de modélisation a un diamètre de particule moyen de L [µm], un intervalle de temps pendant lequel le matériau de modélisation nécessaire pour atteindre la surface de l'objet modélisé est de L × L/200 [ms] ou plus.

8. Appareil (100) configuré pour modéliser l'objet modélisé en trois dimensions (200) selon l'une quelconque des revendications 1 à 7, dans lequel
le matériau de modélisation (201) comprend une résine cristalline,
la température de la surface de l'objet modélisé (200) atteint un point de fusion du matériau de modélisation ou supérieur après chauffage par l'unité d'application d'énergie (116).

9. Appareil (100) configuré pour modéliser l'objet modélisé en trois dimensions (200) selon l'une quelconque des revendications 1 à 8, dans lequel
le matériau de modélisation (201) comprend une résine non cristalline, et
la surface de l'objet modélisé a une viscosité inférieure à 1,0 × 10³ Pa·s après chauffage par l'unité de chauffage.

10. Appareil (10) selon la revendication 1, configuré pour faire voler des particules, comprenant une unité d'émission de lumière laser configurée pour irradier une surface d'un support avec une lumière laser, la surface étant opposée à une surface sur laquelle une particule est maintenue, dans un état dans lequel les particules sont maintenues sur la surface du support par la force d'attraction Fv, dans lequel
l'unité d'émission de lumière laser est configurée pour émettre la lumière laser à une largeur d'impulsion de 10 µs ou moins.

11. Appareil (100) configuré pour faire voler les particules selon la revendication 10, dans lequel
la force d'attraction Fv comprend la force de Van der Waals, la force électrostatique et la force capillaire, et
lorsque la gravité agissant sur la particule est Fg, Fv > Fg.

12. Appareil (100) configuré pour faire voler les particules selon la revendication 10 ou 11, dans lequel lorsque la force exercée sur la particule par la pression de rayonnement est Fr, une condition d'entrée de la lumière laser est Fr > Fv - Fg dans une direction verticale à une surface d'attraction.

13. Appareil (100) configuré pour faire voler les particules selon l'une quelconque des revendications 10 à 12, comprenant en outre une unité configurée pour déplacer le support (111) dans une direction.

14. Procédé de modélisation d'un objet modélisé en trois dimensions (200), comprenant les étapes consistant à :
porter un matériau de modélisation (201) sur une surface d'un support (111) ;
appliquer de l'énergie à une surface d'un objet modélisé (200) ; et
faire voler le matériau de modélisation (201) porté sur le support (111) jusqu'à la surface de l'objet modélisé (200) pendant que l'énergie est appliquée à la surface,
**caractérisé par**
le chauffage du matériau de modélisation (201) jusqu'à ce que le matériau de modélisation (201) volant vers la surface de l'objet modélisé (200) atteigne la surface de l'objet modélisé (200).
